# EUROPEAN PATENT APPLICATION

(11) **EP 1 988 648 A1**
(43) Date of publication of application: **05.11.2008**
(21) Application number: 07107547.7
(22) Date of filing: 04.05.2007
(51) Int. Cl.: H04B 7/26

(54) **Methods, system, apparatuses and related computer program product for allocation of communication resources**

(71) Applicant: Nokia Siemens Networks Oy, 02610 Espoo (FI)
(72) Inventor: Hooli, Kari, 90650, Oulu (FI); Pajukoski, Kari, 90240, Oulu (FI); Raaf, Bernhard, 82061, Neuried (DE); Rinne, Mika P., 02320, Espoo (FI); Michel, Jürgen, 81737, München (DE)
(74) Representative: TBK-Patent

(57) **Abstract**

It is disclosed a method comprising associating communication resource update information with communication resource allocation information, the communication resource allocation information and the associated communication resource update information each being a portion of communication resource information, signalling the association of the communication resource update information with the communication resource allocation information, and transmitting the communication resource information. A further method is disclosed, comprising receiving transmitted communication resource information comprising communication resource allocation information, associated communication resource update information, and a signaled association of the communication resource update information with the communication resource allocation information, retrieving the communication resource allocation information and the associated communication resource update information from the communication resource information based on the signaled association, transceiving signals based on the communication resource allocation information using an allocated communication resource, and updating the communication resource based on the communication resource update information.

## Description

### FIELD OF THE INVENTION

The present invention relates to allocation of communication resources. In particular, the present invention relates to the UTRAN (UMTS Terrestrial Radio Access Network) technology sometimes referred to as LTE (Long Term Evolution).

### BACKGROUND

In 3GPP (3^{rd} Generation Partnership Project), there have been discussions related to the timing control and power control in the UL (Uplink). For example, UL power control adjustments are a-periodic and are included in UL scheduling grants for scheduled data. Furthermore, the view that UL power control adjustments are sent relatively infrequently appears to have wide support in 3GPP. For example, TA (time alignment) updates are sent on a per-need basis, yet at a 2 Hz rate at most. E.g. a L1/L2 (OSI (Open System Interconnection) layer 1/2) control channel is considered as a candidate also for signalling of time alignment updates. Hence, both power control adjustments and time alignment updates can be assumed to be signaled a-periodically and at low rate on average.

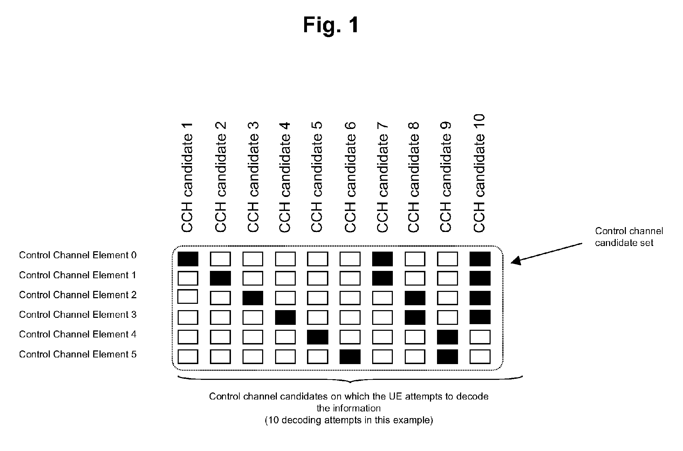

Furthermore, as shown in Fig. 1, the downlink CCHs (control channels) are formed by aggregation of CCEs (control channel elements), and a control channel element is modulated on to a set of resource elements. As shown in Fig. 1, aggregation of the control channel elements is effected in a structured way. A UE (user equipment) monitors a set of candidate control channels, which can be set e.g. by higher layer signalling. The structure defines rules for combining the control channel elements to the Physical Downlink Control Channels (PDCCH). The structure is needed to reduce the number and positions of the potential control channels and hence also the number of blind detections performed by the UE in order to detect the control channels. An example on possible mappings between control channel elements and control channels is also shown in Fig. 1.

Due to the low signalling rate, the use of higher layer signalling for TA and PC (power control) is a possibility which has been considered in 3GPP. It provides an acknowledged signalling method, and the solution does not cause any overhead when no TA or PC updates are transmitted. However, the overhead per each transmitted TA/PC update is large, e.g. around 100 information bits (DL grant + TA + UE ID (user equipment identification) + CRC (Cyclic Redundancy Code)).

In order to overcome one or more or the above disadvantages, which is the object of the present invention, the present invention provides the following aspects.

According to the present invention, in a first aspect, this object is for example achieved by **a method** comprising:
associating communication resource update information with communication resource allocation information, the communication resource allocation information and the associated communication resource update information each being a portion of communication resource information;
signalling the association of the communication resource update information with the communication resource allocation information; and
transmitting the communication resource information.

According to the present invention, in a second aspect, this object is for example achieved by **a method** comprising:
receiving transmitted communication resource information comprising communication resource allocation information, associated communication resource update information, and a signaled association of the communication resource update information with the communication resource allocation information;
retrieving the communication resource allocation information and the associated communication resource update information from the communication resource information based on the signaled association;
transceiving signals based on the communication resource allocation information using an allocated communication resource; and
updating the communication resource based on the communication resource update information.

According to further refinements of the invention as defined under the above first and second aspects,
- the communication resource information is received in at least one control channel element;
- the communication resource allocation information comprises at least one of a user equipment allocation, a user equipment identification and a cyclic redundancy code;
- the communication resource update information comprises at least one parameter of the communication resource to be updated and at least one of the following:
   i) at least one information element indicating whether or not the communication resource is to be updated;
   ii) a respective information field for each one of the at least one parameter;
   iii) a common information field for each one of the at least one parameter and one information element, wherein each parameter allocates a different information length in the common information field and the one information element indicates the information length of the common information field to be read out; and
   iv) a common information field consisting of a number of bits, wherein combinations of the at least one parameter are coded by pattern of the number of bits;
- the communication resource update information comprises at least one of a timing alignment update, a power control update, a frequency update, a phase update, an update of phase differences, and an update of directivity of radiation;
- the communication resource information is received in at least one physical downlink control channel;
- the communication resource allocation information is an uplink scheduling grant;
- in the transceiving, the communication resource allocation information is received in at least one communication resource from a set of control channel candidates comprising the uplink scheduling grant;
- the communication resource information is an uplink scheduling grant for at least one resource of the uplink shared data channel;
- the communication resource allocation information is a downlink scheduling grant for at least one resource of the downlink shared data channel;
- in the transceiving, at least a signal is transmitted using a communication resource from at least one set of uplink shared data channel resources comprised in the uplink scheduling grant;
- in the transceiving, the communication resource to receive is at least one of the selected set of downlink shared data channel resources comprised in the downlink scheduling grant;
- the associating and the signalling are performed on a first communication layer of a layered communication model, and the transmitting and the receiving are performed on a second communication layer of the layered communication model different from the first communication layer;
- at least a portion of the communication resource update information comprises sequence number information;
- in the associating, an index indicating the association to the communication resource update information is attached, in the signalling, the index and the communication resource update information are signaled, and in the retrieving, the associated communication resource update information is retrieved based on the index;
- at least a portion of the index comprises sequence number information.

According to the present invention, in a third aspect, this object is for example achieved by **a method** comprising:
integrating communication resource update information into communication resource allocation information, the communication resource allocation information and the integrated communication resource update information each being a portion of communication resource information; and
transmitting the communication resource information.

According to the present invention, in a fourth aspect, this object is for example achieved by **a method** comprising:
receiving transmitted communication resource information comprising communication resource allocation information comprising integrated communication resource update information;
transceiving signals based on the communication resource allocation information using an allocated communication resource; and
updating the communication resource based on the integrated communication resource update information.

According to further refinements of the invention as defined under the above fourth aspect,
- the method according to the fourth aspect further comprises detecting the integrated communication resource update information based on an invalid format of the communication resource information.

According to the present invention, in a fifth aspect, this object is for example achieved by **an apparatus** comprising:
means for associating communication resource update information with communication resource allocation information, the communication resource allocation information and the associated communication resource update information each being a portion of communication resource information;
means for signalling the association of the communication resource update information with the communication resource allocation information; and
means for transmitting the communication resource information.

According to the present invention, in a sixth aspect, this object is for example achieved by **an apparatus** comprising:
means for receiving transmitted communication resource information comprising communication resource allocation information and associated communication resource update information, and for receiving a signaled association of the communication resource update information with the communication resource allocation information;
means for retrieving the communication resource allocation information and the associated communication resource update information from the communication resource information based on the signaled association;
means for transceiving signals based on the communication resource allocation information using an allocated communication resource; and
means for updating the communication resource based on the communication resource update information.

According to further refinements of the invention as defined under the above fifth and sixth aspects,
- the communication resource information is received in at least one control channel element;
- the communication resource allocation information comprises at least one of a user equipment allocation, a user equipment identification and a cyclic redundancy code;
- the communication resource update information comprises at least one parameter of the communication resource to be updated and at least one of the following:
   i) at least one information element indicating whether or not the communication resource is to be updated;
   ii) a respective information field for each one of the at least one parameter;
   iii) a common information field for each one of the at least one parameter and one information element, wherein each parameter allocates a different information length in the common information field and the one information element indicates the information length of the common information field to be read out; and
   iv) a common information field consisting of a number of bits, wherein combinations of the at least one parameter are coded by pattern of the number of bits;
- the communication resource update information comprises at least one of a timing alignment update, a power control update, a frequency update, a phase update, an update of phase differences, and an update of directivity of radiation;
- the communication resource information is received in at least one physical downlink control channel;
- communication resource allocation information is an uplink scheduling grant;
- the means for transceiving is configured to receive the communication resource allocation information using at least one of a communication resource from a set of control channel candidates comprising the uplink scheduling grant;
- the communication resource information is an uplink scheduling grant for at least one resource of the uplink shared data channel;
- the communication resource allocation information is a downlink scheduling grant for at least one resource of the downlink shared data channel;'
- the means for transceiving is configured to transmit at least a signal in a communication resource from at least one of a set of uplink shared data channel resources comprised in the uplink scheduling grant;
- the communication resource to receive is at least one of the selected set of downlink shared data channel resources comprised in the downlink scheduling grant;
- the means for associating and the means for signalling are configured to operate on a first communication layer of a layered communication model, and the means for transmitting and the means for receiving are configured to operate on a second communication layer of the layered communication model different from the first communication layer;
- at least a portion of the communication resource update information comprises sequence number information;
- the means for associating is configured to attach an index indicating the association to the communication resource update information, the means for signalling is configured to signal the index and the communication resource update information, and the means for retrieving is configured to retrieve the associated communication resource update information based on the index;
- at least a portion of the index comprises sequence number information.

According to the present invention, in a seventh aspect, this object is for example achieved by **an apparatus** comprising:
means for integrating communication resource update information into communication resource allocation information, the communication resource allocation information and the integrated communication resource update information each being a portion of communication resource information; and
means for transmitting the communication resource information.

According to the present invention, in an eighth aspect, this object is for example achieved by **an apparatus** comprising:
means for receiving transmitted communication resource information comprising communication resource allocation information comprising integrated communication resource update information;
means for transceiving signals based on the communication resource allocation information using an allocated communication resource; and
means for updating the communication resource based on the integrated communication resource update information.

According to further refinements of the invention as defined under the above eighth aspect,
- the apparatus according to the eighth aspect further comprises means for detecting the integrated communication resource update information based on an invalid format of the communication resource information.

According to further refinements of the invention as defined under the above fifth to eighth aspects,
- the apparatus according to the above fifth to eighth aspects is implemented as a chipset or module.

According to the present invention, in a ninth aspect, this object is for example achieved by **a system** comprising:
an apparatus according to the above fifth aspect; and
at least one apparatus according to the above sixth aspect.

According to further refinements of the invention as defined under the above ninth aspect,
- the association of the communication resource update information with the communication resource allocation information is a one-to-one association;
- the association of the communication resource update information with the communication resource allocation information is unique for the communication resource allocation information.

According to the present invention, in a tenth aspect, this object is for example achieved by **a system** comprising:
an apparatus according to the above seventh aspect; and
at least one apparatus according to the above eighth aspect.

According to the present invention, in an eleventh aspect, this object is for example achieved by **a computer program product** comprising code means for performing methods steps of a method according to the above first to fourth aspects, when run on a computer.

In this connection, it has to be pointed out that the present invention enables one or more of the following:
- A-periodic and low rate control of timing and power can be coped with by providing a small overhead.
- Moreover, the PC control word and the TA control word appearing at variable rate events for a UE in a non-correlated manner for all the served UEs in the cell can be managed.
- Alternatively, the TA/PC updates may be logically associated also to DL scheduling grants (signalling entities). This is advantageous when UE has scheduled DL transmissions, but does not have any scheduled UL transmissions.
- The UL/DL control channel is dimensioned for transmission of so-called bursty control words in an efficient way.
- Since the signalling resource is shared between transmitted UL/DL scheduling grants, the overhead is in most cases smaller than when TA/PC updates are included to every UL/DL scheduling grant.
- Although TA/PC updates exhibit inherent so-called "burstiness" due to a-periodic updates, TA and PC tolerate relatively high and varying delays. Thus, the update bursts can be smoothened over several sub-frames, by delaying a portion of the TA/PC updates to later sub-frames, providing a more constant signalling load. This can be used to dimension the TA/PC update resources more tightly, thus, reducing the constant overhead further and increasing the efficiency e.g. of TA/PC resource usage.
- The overhead per TA/PC update is relatively small since the updates are associated with the UL/DL scheduling grant. Thus, the overhead due to the UE identification (as with special UL scheduling grants) is avoided.
- The signalling does not change the UL/DL scheduling grant format and, thus, does not impact the decoding complexity of UL/DL scheduling grants.
- The distribution of scheduling commands with control channel candidates or control channel elements remains unlimited by the TA/PC update. Thus, the allocation of UEs to control channel candidates or control channel elements can be done liberally. It is possible to code some other information more efficiently when this freedom of the allocation is available. If several competing optimizations all making use of a particular allocation are possible, then the one that gives the highest advantage may be selected. Explicit indexing such as set out herein below is more efficient than an individual TA/PC command, because the later would need to identify the UE. As there are typically more UEs in a cell or routing area than potential grants in a control channel, also more bits are necessary for an explicit UE identification compared to the indexing described herein below.
- TA/PC updates do not need to be coded individually but can be coded e.g. together with other information, including TA/PC updates for several UEs, or so-called Cat0 information indicating general properties of the scheduling structure, or with the UL/DL scheduling grant, or with a combination thereof.

The present invention is directed to provide a signalling scheme for a bursty control of uplink transmission. More particularly, the present invention is directed to the design of UL/DL signalling needed for the signalling of UL power control commands and/or time alignment updates. In an embodiment of the present invention, a signalling design of the Physical Downlink Control Channel (PDCCH) is shown, which induces relatively small signalling overhead, while yet allowing fast scheduling and allocations in a sub-frame resolution both for the DL and UL payload. Alternatively, the TA/PC updates may be logically associated also to DL scheduling grants (signalling entities) e.g. in case the UE has scheduled DL transmissions, but does not have any scheduled UL transmissions.

More particularly, in the invention, TA and PC updates are transmitted preferably only for a fraction of the UEs having a UL/DL scheduling grant in a given sub-frame/preceding sub-frame. The TA/PC updates may be transmitted separately (e.g. on separate resource elements of PDCCH) from UL scheduling grants but each of TA/PC updates is logically associated to a particular control channel candidate, control channel element, or other such structure used in definition of UL/DL control channel. Hence, a TA/PC update is associated to the UL/DL scheduling grant that uses the corresponding control channel candidate or control channel element. This may associate a TA or PC update to a particular UE ID. As an alternative for implicit association, each of TA/PC updates may include a few bits explicitly indicating an associated control channel candidate.

### BRIEF DESCRIPTION OF THE DRAWINGS

Embodiments of the present invention are described herein below with reference to the accompanying drawings, in which:

Fig. 1 shows an example of control channel elements (CCE) and the control channel candidates;

Fig. 2A shows the signalling principle for the TA and/or PC updates with the UL scheduling grants on the DL control channel according to a first embodiment of the present invention; Fig. 2B shows the signalling principle for the TA and/or PC updates with the DL scheduling grants on the UL control channel according to the first embodiment of the present invention;

Fig. 3 shows a method for allocating communication resources according to the first embodiment of the present invention;

Fig. 4 shows one apparatus (e.g. a Base Station) for allocating communication resources according to the first embodiment of the present invention and another apparatus (e.g. a User Equipment) for decoding and interpreting the allocations and control signalling commands of the one apparatus, the another apparatus being configured to apply the allocations and control signalling commands e.g. in the signal transmission.

Fig. 5 shows a first example of association by means of control channel candidates according to the first embodiment of the present invention;

Fig. 6 shows a second example of association by means of control channel elements according to the first embodiment of the present invention;

Fig. 7 shows a method for allocating communication resources according to a second embodiment of the present invention; and

Fig. 8 shows one apparatus (e.g. a Base Station) for allocating communication resources according to the second embodiment of the present invention and another apparatus (e.g. a User Equipment) for decoding and interpreting the allocations and control signalling commands of the one apparatus, the another apparatus being configured to apply the allocations and control signalling commands e.g. in the signal transmission.

### DETAILED DESCRIPTION OF EMBODIMENTS OF THE PRESENT INVENTION

Embodiments of the present invention are described herein below by way of example with reference to the accompanying drawings.

There are several embodiments concerning e.g. implementation of the solution according to the present invention. Without being restricted thereto, several embodiments are described herein below, referring to "IMPLICIT AND EXPLICIT ASSOCIATION", "ASSOCIATION VIA CONTROL CHANNEL CANDIDATES/ELEMENTS", "ALTERNATIVE ASSOCIATIONS", "TRANSMISSION OF THE COMMUNICATION RESOURCE UPDATE INFORMATION", "UPDATING COMMUNICATION RESOURCES", and "NON-SCHEDULED UEs".

It is to be noted that for this description, the terms "TA/PC update(s)/command(s) (e.g. 2031,...,203n)" and "UL/DL (scheduling) grants (e.g. 2021, ..., 202m_{UL/DL})" are examples for the communication resource update information and the communication resource allocation information, respectively, without restricting the latter terms to the special technical or implementation details imposed to the terms "TA/PC update(s)/command(s)" and "UL/DL (scheduling) grants".

Concerning especially the terms "TA" and/or "PC", there may be other updates than TA and/or PC, e.g. frequency control, phase control, control of phase differences on different sub-carriers or sub-bands, control of directivity of radiation to be used e.g. for beam forming, or control of other similar features. Furthermore, the term "TA/PC" refers to at least one of timing alignment and power control, i.e. TA (i.e. Timing Advance Control) and/or PC (Power Control) may be utilized both jointly and independently:
- Power Control independent of whether or not being used for Timing Advance Control;
- Timing Advance Control independent of whether or not being used for Power Control;
- jointly to Power Control and Timing Advance Control, regardless of only either one of them being present at a time or of both of them being present at the same time.

Furthermore, a Power Control (PC) update may be applied to a selected multi-carrier or a single carrier signal waveform so that the previously applied transmission power on a symbol divided by the bandwidth may be updated with a relative increase or decrease of power for the subsequent transmission of symbols divided by the bandwidth. The bandwidth may change between the earlier transmission and the later transmission, which scale the actual transmission power independently of the applied power control divided by the bandwidth. Instead of the relative update mentioned above, as an alternative, also an absolute update inside a defined dynamic range may be provided.

In addition, a Timing Advance (TA) Update may be applied to a selected multi-carrier or a single carrier waveform so that the previously applied symbol timing in the uplink transmission relative to the downlink reception may be updated by a relative increase or decrease of time delay for the subsequent transmission of symbols. These TA updates may target e.g. at having in-phase symbol reception from multiple UEs at a BS receiver. Such alignment of reception time of symbols provides orthogonality, which reduce uplink interference and increase uplink capacity significantly.

Further, a Directivity update may be applied to a selected multi-carrier or a single carrier signal waveform so that the previously applied phase difference between multiple transmit antennas on a symbol may be updated to another phase difference between multiple antennas for the forthcoming transmission of symbols. The phase rotation between symbols transmitted from different antennas may be an absolute phase difference or a relative phase difference, updated from the phase difference applied in the earlier transmission.

### [FIRST EMBODIMENT]

IMPLICIT AND EXPLICIT ASSOCIATION

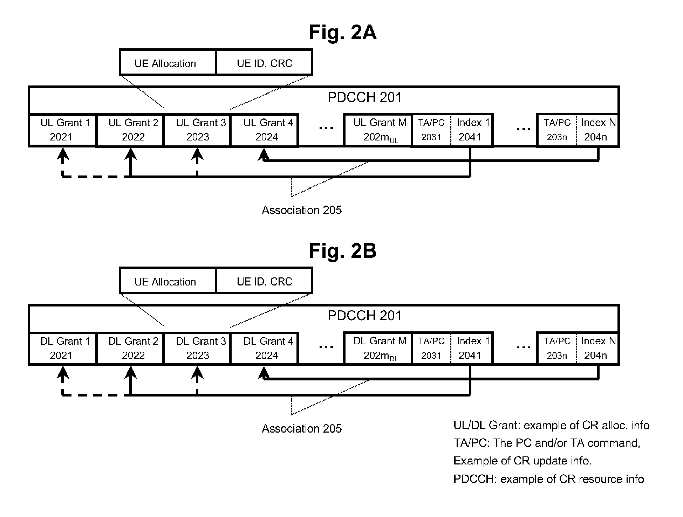

One possible association principle is illustrated e.g. in Fig. 2A. A physical DL control channel PDCCH 201, as an example of communication resource (CR) information, may comprise from one up to M_{UL} UL scheduling grants 2021, 2022, 2023, 2024,...,202m as examples of CR allocation information. Alternatively, the up to M_{UL} UL scheduling grants may each be conveyed in a separate PDCCH. Each UL scheduling grant may comprise a user equipment identification UE ID, a cyclic redundancy code CRC, and a UE allocation for Physical Resource Blocks (PRBs) on shared data channels. Every PDCCH appears in transmission resources of e.g. one or more control channel candidates or control channel elements as shown in Fig. 1 mapped to the Physical Resource Elements in the transmission frames. The PDCCH 201 may further comprise up to N TA/PC updates 2031, 203n, as examples for CR update information. The TA/PC updates 2031, 203n may be respectively associated with one of the UL scheduling grants 2021,..., 202m_{UL} e.g. via indices 2041,...,204n, thus resulting in associations 205.

As an alternative, another possible association principle is illustrated e.g. in Fig. 2B. The PDCCH 201 may also comprise from one up to M_{DL} DL scheduling grants 2021, 2022, 2023, 2024,...,202m_{DL} as examples of CR allocation information. Alternatively, the up to M_{DL} DL scheduling grants may each be conveyed in a separate PDCCH. It is to be noted that the amount of the number M_{UL} of the UL scheduling grants 2021,..., 202_{UL} and the number M_{DL} of the DL scheduling grants 2021,...,202_{DL} may be equal or, as an alternative, different numbers. Each scheduling grant may comprise a user equipment identification UE ID, a cyclic redundancy code CRC, and a UE allocation for Physical Resource Blocks (PRBs) on the shared data channels. Every PDCCH appears in transmission resources of e.g. one or more control channel candidates or control channel elements as shown in Fig. 1 mapped to the Physical Resource Elements in the transmission frames. The PDCCH 201 may further comprise up to N TA/PC updates 2031, 203n, as examples for CR update information. The TA/PC updates 2031, 203n may be respectively associated with one of the DL scheduling grants 2021,...,202m e.g. via indices 2041,...,204n, thus resulting in associations 205. It is to be noted that this alternative is applicable to the case when the UE has scheduled DL transmissions, but does not have any scheduled UL transmissions.

In case of implicit association 205 between UE ID and TA/PC update, the presence of the indices 2041,...,204n may not required, but the association(s) 205 may be signaled by other means, e.g. on a higher signalling layer or even be associated permanently in a fixed predetermined way, or there may be a default association that my be changed by higher layer signaling, if desired. In that case, the UE may decode the UL scheduling grant after reception. Then, the UE 1) is configured to inspect if a TA/PC update is possibly associated to the UL scheduling grant and 2) to decode the resources corresponding to TA/PC updates if necessary (e.g. when coded with a CRC).

A further option of implicit association 205 resides in fixedly associating a TA/PC update 2031,...,203n with a subset of the UL/DL scheduling grants 2021,..., 202m_{UL/DL} and transmitting the TA/PC update right together with the TA/PC updates of this subset. That means a constant overhead would be attached to the UL/DL scheduling grants in this subset, but not to the other UL/DL scheduling grants. UEs that need to get TA/PC updates can then be scheduled to use one of the UL/DL scheduling grants of this subset, while the remaining UEs could be scheduled to use any of the remaining grants. However, as the subset that does include TA/PC updates is set in advance, no blind decoding attempts from the UE are required and therefore, it does not complicate the decoding process of the UE. Therefore, the TA/PC updates do not need to be coded individually but can be coded with the UL/DL scheduling grant.

Also mixed variants between implicit and explicit associations are possible. For example, some TA/PC updates may be implicitly associated with UL/DL scheduling grants (or CCEs or candidates etc., for the sake of descriptive simplification, the rest of this section refers CCEs) while other ones may be associated explicitly. This is a compromise between full flexibility of explicit association and saving overhead for the indices required for explicit association. A further variant resides in at least some TA/PC updates being explicitly associated not with all possible CCEs, but only with a subset of those. This will reduce the number of bits required for addressing the subset compared to the full set. One variant of the latter that still maintains full flexibility resides in explicitly selecting a set of CCEs and then associating e.g. TA/PC updates with the elements of this set implicitly. The first TA/PC update may be associated with the first element of the set and so on, but other associations are possible as well. To select ns elements for a subset out of a total set of nt elements, there are nt! / (ns! * (nt-ns)! ) possibilities, "!" being the factorial operator. This leads to less than the nt ^ ns possibilities to make ns individual associations, each to one of the nt elements, "^" being the exponentiation operator. This allows reducing the signaling amount i.e. the number of bits to signal the association. While the difference is typically not too big for large nt and small ns, for the case where both nt and ns are not too large or of similar size, the difference may well be sufficient to save at least one bit for signaling.

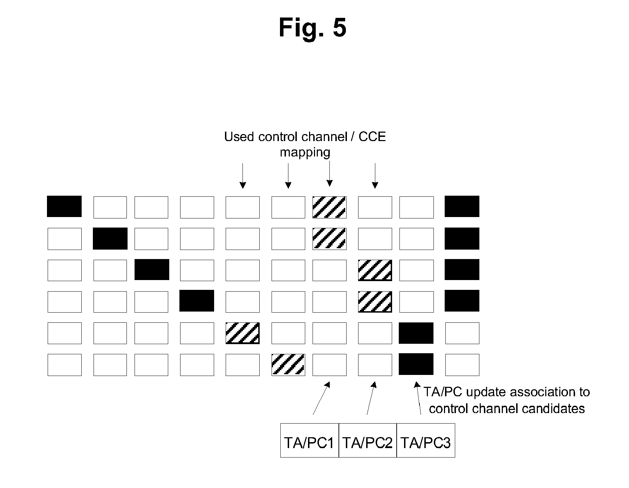

Another option to transmit the set of TA/PC updates resides in using one of the UL/DL scheduling grants (e.g. a grant for a predetermined dummy UE ID) and using the signaling space provided by the UL/DL scheduling grant for signaling this set of commands. In this way, there is no constant overhead in case no TA/PC updates are to be transmitted. The expense is additional blind detection with this predetermined UE ID. Depending on the detail of the coding, this may actually not be any additional overhead (if e.g. the CRC is bit wise exclusive or combined with the UE ID), or it may be an additional blind decoding attempt. In the latter case, it is possible to limit the set of possible locations even further than the set of grants. For example, in Fig. 5 it may be sufficient to only consider to use the first, 7^{th} or last column, which would allow to aggregate either 1, 2 or 4 CCEs, which may provide in turn sufficient flexibility.

In case of explicit association 205 between UE ID and TA/PC update 2031,...,203n, the associated control channel candidate or control channel element is explicitly indicated on each of TA/PC update e.g. by means of the indices 2041,...,204n. Each UE having received an UL scheduling grant or a DL scheduling grant needs to decode also the TA/PC updates 2031,...,203n. The additional time consumed for the search and decoding of the TA/PC after a successful decoding of the scheduling grant is not that critical, because e.g. the L2 multiplexing, Transport Block creation and encoding can start immediately after the scheduling grant is available, and PC/TA are needed only beginning at the time instant of transmitting e.g. a first symbol of an UL sub-frame.

In summary, the association 205 between TA/PC updates 2031,...,203n and control channel candidates or control channel elements can e.g. be set by broadcasting the association(s) 205 via the System Information providing information e.g. about the network configuration within a cell, or by higher layer signalling. Alternatively, the association can be signaled together or as a part of the TA/PC signalling. For example, the index 2041,...,204n is attached with the TA/PC update 2031,...,203n providing information to which control channel candidates or control channel elements the TA/PC update 2031,...,203n refers to. The association 205 may effected between TA/PC updates 2031,...,2031 and UL scheduling grants 2021,...,202m_{UL} or DL scheduling grants 2021,...,202m_{DL}, respectively.

As described herein below in further detail, the association 205 of the UL/DL scheduling grants 2021,..., 202m_{UL/DL} with the TA/PC updates 2031,...,203n may be a one-to-one association, or, as an alternative, may be unique for the UL/DL scheduling grants 2021, ..., 202m_{UL/DL}, as indicated by the dashed arrows pointing, as examples, to the functional blocks of the UL/DL scheduling grants 2021_{UL/DL} and 2023_{UL/DL}.

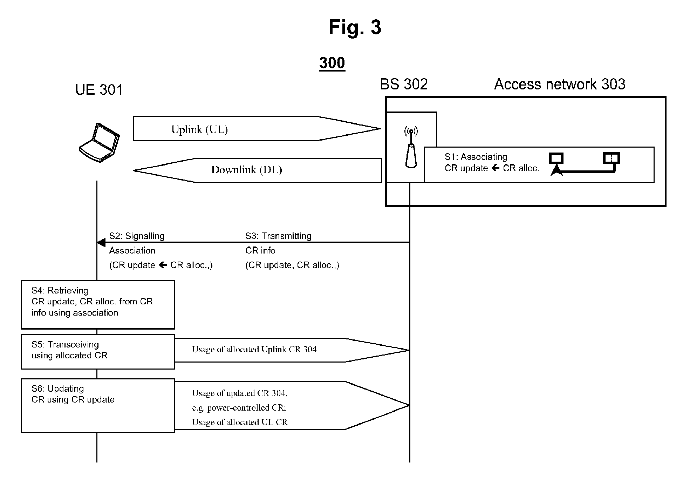

Fig. 3 shows the method for allocating CRs according to the present invention. Signalling between elements is indicated in horizontal direction, while time aspects between signalling are reflected in the vertical arrangement of the signalling sequence as well as in the sequence numbers.

As shown in Fig. 3, a communication network 300 may comprise a user equipment UE 301, a base station BS 302 and an access network 303. The BS 302 may be a portion of an access entity (not shown) providing access for the UE 301 to the access network 303. As shown in Fig. 3, communication or signalling from the UE 301 to the BS 302 is referred to as Uplink (UL), and communication or signalling from the BS 302 to the UE 301 is referred to as Downlink (DL).

In step S1, e.g. the BS 302 or any other entities in the access network 303, performs associating communication resource (CR) update information (e.g. TA/PC updates 2031,...,203n according to Fig. 2) with CR allocation information (e.g. UL/DL scheduling grants 2021,..., 202m_{UL/DL} or UE allocation, respectively). The CR allocation information and the associated CR update information may be a portion of CR information (e.g. the PDCCH 201). Further alternatives for this associating operation are set out in further detail herein below.

In step S2, the association(s) 205 are signaled from the BS 302 e.g. to the UE 301 e.g. implicitly (see e.g. above-described System Information or higher layer signalling) or explicitly (see e.g. above-described indices 2041,...,204n).

In step S3, the CR information (e.g. PDCCH 201) comprising the CR update information and the CR allocation information are transmitted from the BS 302 to the UE 301. This transmitting operation is set out in further detail herein below.

It is to be noted that the above steps S2 and S3 may be performed in that order or in a reverse order, on the same communication layer or on different communication layers, substantially simultaneously (as shown in Fig. 3) or timely spaced, as long as provision of the CR update information 2031,...,203n, the CR allocation information 2021,..., 202m_{UL/DL} and the association(s) 205 to the UE 301 remains ascertained. Alternatively, the CR update information may be logically associated also to the preceding DL scheduling grants.

In step S4, the UE 301 performs retrieving the CR allocation information 2021,..., 202m_{UL/DL} and the associated CR update information 2031,...,203n from the transmitted CR information 201 based on the signaled association(s) 205. This retrieval operation is set out in further detail herein below.

In step S5, the UE 301 performs transceiving signals using the allocated CR 304 allocated e.g. by the BS 302 or the access network 303.

In step S6, the UE 301 performs updating the CR based on the communication resource update information (e.g. power-controlling the allocated CR by increasing/decreasing transmitting power according to the PC update received. As an example, increased transmitting power is shown in Fig. 3 by a thick arrow extending from the functional block of step S6).

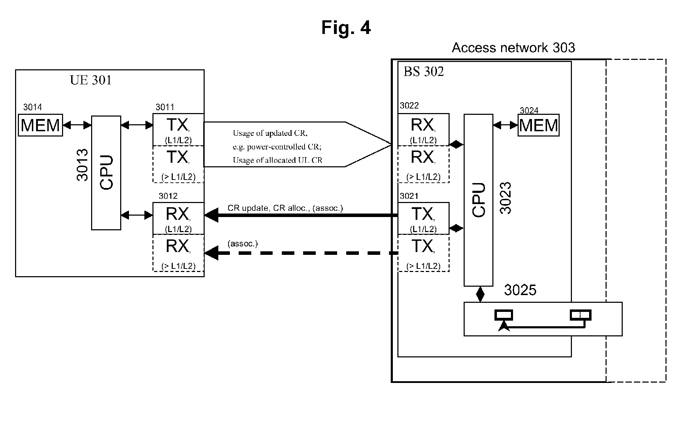

Fig. 4 shows apparatuses (i.e. user equipment 301 and base station 302) according to the present invention. The BS 302 of the access network 303 comprises a sender TX 3021, a receiver 3022, a central processing unit (CPU) 3023, a memory 3014 and means for associating 3025. The CPU 3023 may be configured to process various data inputs and to control the functions of TX 3021, the RX 3022, the memory 3024 and means for associating or associator 3025. The memory 3024 serves for storing code means for carrying out e.g. the method according to the invention, when run on the CPU 3023, and e.g. for storing the CR update information 2031,...,203n, the CR allocation information 2021,..., 202m_{UL/DL}, and optionally the indices 2041,...,204n. The RX 3022 as well as the TX 3021 may optionally be configured to receive (transmit) on different communication layers, as described herein above. It is to be noted that the TX 3021 and the RX 3022 may be provided as separate means (as shown in Fig. 4), but may also be provided as an integral transceiver (not shown). Furthermore, the associating means 3025 may also be, in part or as a whole, comprised in an entity different from the BS 302. As an example of a communication resource (CR), an uplink CR 304 (e.g. an uplink channel for uplink transmission from the UE 301 to the BS 302) is shown in Fig. 4.

The means for associating 3025 of the BS 302 may be configured to associate communication resource update information 2031,...,203n with communication resource allocation information 2021,..., 202m_{UL/DL}, the communication resource allocation information 2031,...,203n and the associated communication resource update information 2031,...,203n each being a portion of communication resource information 201.

The means for sending 3021 of the BS 302 may be configured to signal the association 205 of the communication resource update information 2031,...,203n with the communication resource allocation information 2021,..., 202m_{UL/DL}, and also may be configured to transmit the communication resource information 201. As mentioned above, the communication resource update information 2031,...,203n may be signaled/transmitted on the same communication layer (e.g. L1/L2 signalling) as the communication resource allocation information 2021,..., 202m_{UL/DL}, or alternatively on a higher communication layer.

As also shown in Fig. 4, the UE 301 comprises a sender TX 3011, a receiver or means for receiving 3012, a central processing unit CPU 3013 and a memory 3014. The CPU 3013 may be configured to process various data inputs and to control the functions of TX 3011, the RX 3012 and the memory 3014. The memory 3014 serves for storing code means for carrying out e.g. the method according to the invention, when run on the CPU 3013. The RX 3012 as well as the TX 3011 may optionally be configured to receive or transmit on different communication layers, as described herein above. It is to be noted that the TX 3011 and the RX 3012 may be provided as separate means (as shown in Fig. 4), but also be provided as an integral transceiver (not shown).

The means for receiving 3012 of the UE 301 may be configured to receive the transmitted communication resource information 201 comprising communication resource allocation information 2021,..., 202m_{UL/DL} and associated communication resource update information 2031,...,203n, and may be configured to receive the signaled association 205 of the communication resource update information 2031,...,203n with the communication resource allocation information 2021,..., 202m_{UL/DL}. As mentioned above, the communication resource update information 2031,...,203n may be received on the same communication layer (e.g. L1/L2 signalling) as the communication resource allocation information 2021,..., 202m_{UL/DL}, or alternatively on a different communication layer.

The CPU 3013 and e.g. the means for receiving 3012 and the memory 3014 of the UE 301 may be configured to retrieve the communication resource allocation information 2021,..., 202m_{UL/DL} and the associated communication resource update information 2031,...,203n from the communication resource information 201 based on the signaled association 205.

Further, the CPU 3013 and e.g. the means for sending 3011, the means for receiving 3012 and the memory 3014 of the UE 301 may also be configured to transceive signals using the allocated CR (e.g. an Uplink transmission channel, uplink CR hereinafter) based on the communication resource allocation information 2021,..., 202m_{UL/DL}.

Additionally, the CPU 3013 and e.g. the means for sending 3012 and the memory 3014 of the UE 301 may also be configured to update the communication resource 304 (e.g. Uplink CR) based on the communication resource update information 2031,...,203n.

In addition to the description given above e.g. in the section labeled "IMPLICIT AND EXPLICIT ASSOCIATION", the following description provides embodiments of the present invention with particular regard to the terms "associating" and "association".

ASSOCIATION VIA CONTROL CHANNEL CANDIDATES

In Fig. 5, as an example, the association of a TA/PC update 2031,...,203n to a UL/DL scheduling grant 2021,..., 202m_{UL/DL} by means of control channel candidates 1 to 10 (1^{st} to 10^{th} columns) is illustrated. The set of candidate control channels monitored by the UE 301 may contain at least one control channel candidate (columns with functional blocks TA/PC 1, TA/PC2 and TA/PC 3 pointing to the same) which is associated with a TA/PC update 2031,...,203n.

As mentioned herein below, the BS 302 may decide to allocate for UE 301 at least one control channel candidate (Fig. 5: "Used control channel/CCE mapping", 5^{th} to 8^{th} control channel candidates) indicated by the functional blocks of the CCEs being hatched from bottom left to top right. According to Fig. 5, control channel candidates 7 to 9 are associated with a respective TA/PC update 2031,...,203n. When decoding the control channel candidates, particularly the 7^{th} or 8^{th} control channel candidate, the UE 301 may be configured to detect the association 205 of these 7^{th} or 8^{th} control channel candidates, to retrieve the corresponding TA/PC update 2031,...,203n (TA/PC 1 or TA/PC2 according to Fig. 5, TA/PC 3 remains unused in this example), and to update the corresponding UL resource according to the retrieved TA/PC update 2031,...,203n e.g. for the subsequent UL transmission.

ASSOCIATION VIA CONTROL CHANNEL ELEMENTS

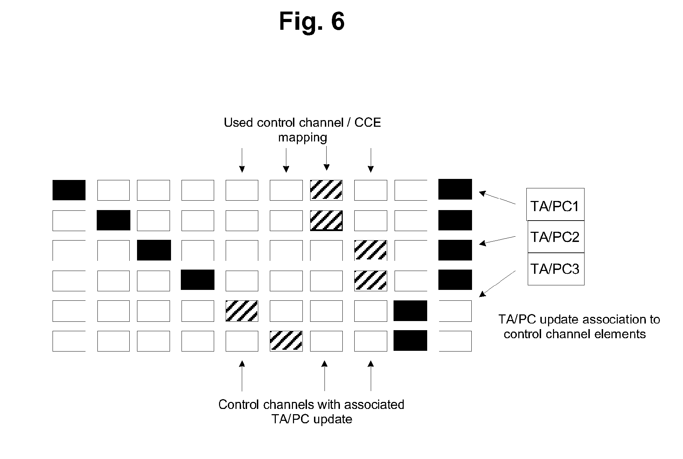

As shown in Fig. 6, as an alternative to the above "ASSOCIATION VIA CONTROL CHANNEL CANDIDATES", the association 205 of the TA/PC update 2031,...,203n to a UL scheduling grant 2021,..., 202m_{UL/DL} may also be effected by means of control channel elements 1 to 6 (1^{st} to 6^{th} lines according to Fig. 5). The set of candidate control channels (CCEs) monitored by the UE 301 may contain at least one control channel element which is associated with a TA/PC update 2031,...,203n.

As mentioned herein below, the BS 302 may decide to allocate for UE 301 at least one control channel candidate (Fig. 6: "Used control channel/CCE mapping", 5^{th} to 8^{th} control channel candidate) indicated by the functional blocks of the CCEs being hatched from bottom left to top right. According to Fig. 6, control channel elements (CCEs) 1, 3, and 5 are associated with a respective TA/PC update 2031,...,203n. When decoding the control channel candidates, particularly the 5^{th}, 7^{th} or 8^{th} control channel candidates (Fig. 6: "Control channels with associated TA/PC update"), the UE 301 may be configured to detect the association 205 of these 1^{st}, 3^{rd}, or 5^{th} control channel element (CCE), to retrieve the corresponding TA/PC update 2031,...,203n (TA/PC 1, TA/PC2 or TA/PC 3 according to Fig. 5), and to update the corresponding UL resource according to the retrieved TA/PC update 2031,...,203n e.g. for the subsequent UL transmission. It is to be noted that in this example, also control channel candidates 1, 3, 9, and 10 would also be associated, via control channel elements 1, 3, and 5, with at least one TA/PC update 2031,...,203n, but these control channel candidates 1, 3, 9, and 10 are considered to be not allocable by the UE 301 for any reason.

ALTERNATIVE ASSOCIATIONS

Alternatively, special associations 205 (e.g. pointers) may be defined that i) point to all the CR allocation information 2021,..., 202m_{UL/DL}, or ii) point to possibly only a part of all the CR allocation information 2021,...,202m_{UL/DL} e.g. only for the allocations using intra TTI (Transmission Time Interval) hopping, typically the persistently scheduled UEs, or iii) even indicate that e.g. the PC is applicable to a plurality of UEs 301. This may be favorable if e.g. all the UEs 301 e.g. need to be power-controlled (e.g. power up/down) because of a sudden rise/reduction in interference from (or to) neighboring cells. Thus, few indices may be reserved as special associations 205 to indicate which specific (sets of) UEs 301 are addressed. In that case, as shown in Fig. 2, association(s) 205 which is (are) unique for the CR allocation information 2021,..., 202m_{UL/DL}, but is (are) not a one-to-one association, may be used.

TRANSMISSION OF THE COMMUNICATION RESOURCE UPDATE INFORMATION

As described hereinabove, TA/PC updates 2031,...,203n may be transmitted e.g. on a DL control channel element (elements) (CCE/CCEs) that is especially reserved for them. Furthermore, TA/PC updates 2031,...,203n may be encoded separately from the corresponding scheduling grants 2021,..., 202m_{UL/DL}. With respect to each other, the multiple TA/PC updates 2031,...,203n may be encoded either separately or jointly, possibly with a CRC. In the case of joint coding, the code rate for the TA/PC updates 2031,...,203n may be selected e.g. according to the requirements of the UL/DL scheduling grant 2021,..., 202m_{UL/DL} having the lowest code rate from the UL grants 2021,..., 202m_{UL/DL} with associated TA/PC update 2031,...,203n, thus, e.g. requiring blind decoding at the UE 301.

Furthermore, TA/PC updates 2031,...,203n may be mapped directly on DL resource elements (e.g. control channel elements) that are especially reserved for them. Again, the TA/PC updates 2031,...,203n may be encoded either jointly or separately, or protected by spreading. The TA/PC updates 2031,...,203n of different users may e.g. be frequency, or time divided or code division multiplexed on the resource elements (except with joint encoding). It is obvious that the control channels for different UEs may apply a reasonable combination of the aforementioned multiplexing schemes in time-, frequency- and code-domains.

UPDATING COMMUNICATION RESOURCES

There are multiple possibilities for allocating resources for the TA/PC updates 2031,...,203n and e.g. for multiplexing the TA/PC updates 2031,...,203n to the PDCCH 201. The amount of resources allocated for TA/PC updates 2031,...,203n remains semi-statically constant. In order to maintain a constant allocation of communication resources (CRs) for TA/PC updates 2031,...,203n, the number of TA/PC updates 2031,...,203n e.g. per subframe may vary according the used coding scheme. The resources allocated for TA/PC updates 2031,...,203n may e.g. be set on System Information or by higher layer signalling.

In addition, there are multiple possibilities for signalling TA/PC updates 2031,...,203n:
- An information element (e.g. one bit) may be added to each TA/PC entry 2031,...,203n indicating whether TA or PC is updated in case that the number of bits for TA and PC updates is equal.
- Each TA/PC update 2031,...,203n may include separate fields for both TA and PC updates, especially if either TA or PC or both may be updated simultaneously. A variant of this is a field, which carries the longer control word (e.g. PC) and a leading bit, which indicates that the shorter control word (e.g. TA) is actually in use. This allows a) the longer control word to be signaled alone, b) the shorter control word to be signaled alone (with unused bits set to 0, and c) both control words to be signaled simultaneously so that the shorter control word is present fully, but the resolution (accuracy) of the longer control word may be reduced to the number of bits remaining unused from the shorter control word.
- E.g. on each sub-frame, a permanent number of TA/PC updates 2031,...,203n may be reserved for TA only, while the remaining TA/PC updates 2031,...,203n may be used for PC (e.g. with 3 updates/sub-frame, update #1 is used for TA and updates #2 and #3 are used for PC). In this case, the selection between TA and PC update 2031,...,203n may be performed implicitly by the selection of the CCE or control channel candidate used for the UL scheduling grant 2021,..., 202m_{UL/DL}.
- Alternatively, more general implementations for the TA/PC updates 2031,...,203n are possible as well: there may be some number of possible TA/PC command combinations e.g. 4 bits allowing 16 different commands. It is not necessary to split bits for TA/PC strictly, but it is also possible to assign some of the 16 commands to specific meanings for TA/PC, e.g. there may be 3 possible values for Power control (e.g. +1db, -1dB and -3dB power change) and 5 values for TA. Then there are 3*5=15 combinations that can be assigned 15 out of the 16 possible commands. The last command may be used for a specific action, e.g. power control step of -5dB but no change in TA. In other words, some of the possible update values correspond to TA updates, some values to PC updates and some to a combination of both TA and PC updates.

Alternatively, e.g. a PC command 2031,...,203n may need to be repeated. However, the UEs 301 receiving the PC command 2031,...,203n more often, may have to ignore the PC repeated command, based on either a kind of sequence number or timer or both. This is in particular relevant for the case that commands are sent targeting not only a single UE but multiple UEs as described above.

Alternatively, since UEs 301 may have different DRX (Discontinuous Reception) cycles, a PC command 2031,...,203n may also need to be repeated. However, the UEs 301 receiving the PC command 2031,...,203n more often, may have to ignore the repeated PC command, based on either a kind of sequence number or timer or both. In this case, e.g. sequence number information can be part of the index as well (doubling the number of indices to reserve) or can be part of the "command" 2031,...,203n itself: There is typically no reason that TA control is needed for multiple UEs 301 because it is unlikely that several UEs change their location at the same time (an exception may be UEs traveling in a bus or train on similarly the same transport vehicle or at least at the same speed in the same direction e.g. multiple cars in a row). Therefore, the TA part can be used to convey a sequence number.

Furthermore, the UE 301 may be configured to apply both such a common and an independent command for an individual PC command 2031,...,203n due to path-loss changes or other reasons. There may be also cases where the UE 301 may be configured to apply multiple individual commands; this could be used to make infrequent larger steps without allocating more bits to every command field. For example, this may be used for TA changes for infrequent round the corner events requiring unusually large TA changes and possibly also power changes.

### [SECOND EMBODIMENT]

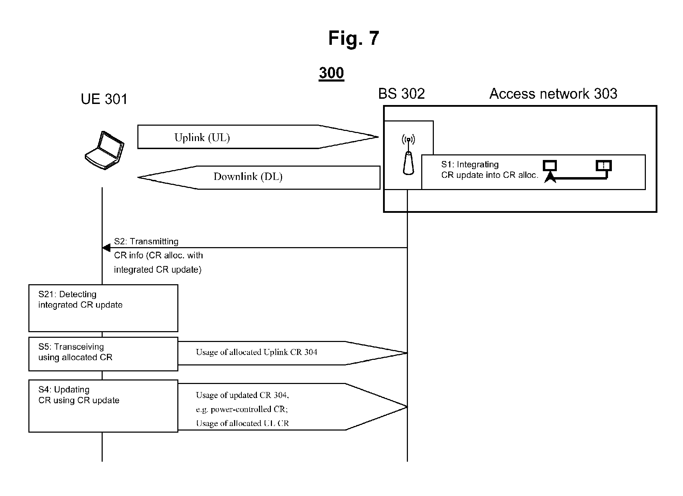

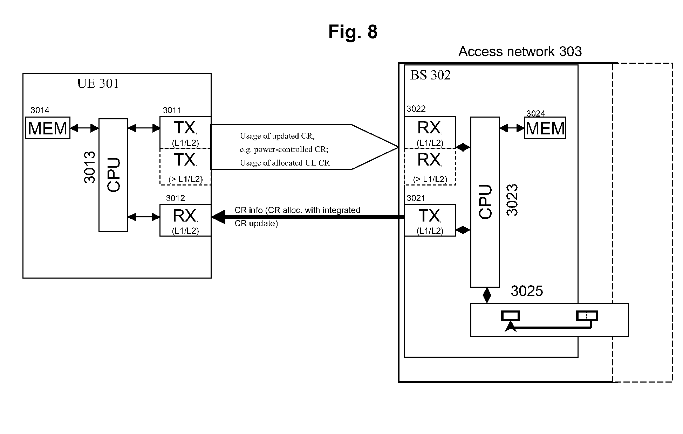

In the following, the second embodiment according to the present invention is described with reference to Figs. 7 and 8. It is to be noted that any description of means identical or substantially identical with those of the first embodiment (UE 301, BS 302, Access network 303, memories 3014 and 3024, sender 3011, receiver 3022, and CPUs 3013 and 3023) is omitted.

As shown in Figs. 7 and 8, the method and the one apparatus according to the second embodiment comprise:
- in step S1 or means for integrating 3025, integrating of the communication resource update information (2031 to 203n) into the communication resource allocation information (2021 to 202m_{UL/DL}) is performed, the communication resource allocation information and the associated communication resource update information each being a portion of communication resource information (201); and
- in step S2 or the means for sending 3021 e.g. in conjunction with the CPU 3023 and the memory 3024, transmitting of the communication resource information is performed e.g. on the L1/L2 control channel.

As also shown in Figs. 7 and 8, the method and the another apparatus according to the second embodiment comprise:
- in step S2 or the means for receiving 3011 e.g. in conjunction with the CPU 3013 and the memory 3014, receiving of the transmitted communication resource information (201) comprising communication resource allocation information (2021 to 202m_{UL/DL}) comprising integrated resource update information (2031 to 203n) is performed;
- in optional step S21 or optionally e.g. in the CPU 3013 and the memory 3014, detecting of the integrated communication resource update information based e.g. on an invalid format of the communication resource information is performed;
- steps S3 and S4 are substantially identical with steps S5 and S5, respectively, according to the first embodiment of the present invention, with the exception that step s4 or the CPU 3013 e.g. in conjunction with the memory 3014 may optionally be configured to perform updating of the communication resource based on the detected integrated communication resource update information.

In summary, according to the second embodiment the present invention e.g. the L1/L2 control channel may be used. Although the TA and PC updates are not acknowledged, the robustness of the signalling may be comparable to the one of higher layer signalling. Furthermore, if relative signalling is used, then neither TA nor PC signalling is so critical regarding lost signalling: If the UE does miss a command and consequently does not apply it, a so-called NodeB will realize that the power or timing is still not appropriate and will send another TA/PC command that will cure the loss of the first one.

One option according to the second embodiment of the present invention for signalling on L1/L2 control channel is to include or integrate TA and/or PC updates into each UL/DL scheduling grant, as described herein below. The overhead per each transmitted TA/PC update is minimal, while this solution creates only a minimum constant overhead when no TA and/or PC updates are transmitted. If, due to the low rate of TA and/or PC updates, the constant non-essential overhead in case of no TA and/or PC updates being transmitted becomes larger, then this solution may be further optimized by the further embodiments described herein above.

An alternative option according to the second embodiment of the present invention resides in a specific UL/DL scheduling grant e.g. for at least one of TA and/or PC updates. The specific UL/DL scheduling grant containing e.g. TA and/or PC can be identified by an invalid format of the information carried by the L1/L2 control channel. The signalling overhead per each transmitted TA/PC update was estimated to be less than 40 bits, and this solution does not cause any overhead when no TA or PC updates are transmitted.

Yet another option according to the second embodiment of the present invention is to define a specific L1/L2 signalling e.g. for TA and/or PC updates.

[Further embodiments]

For the purpose of the present invention as described herein above, it should be noted that
- an access technology may be any technology by means of which a UE can access a communication network via a BS. Any present or future technologies, such as WiMAX, WLAN, BlueTooth©, Infrared, and the like may be used;
- generally, the present invention is applicable in those BS/UE environments relying e.g. on the Internet Protocol IP. The present invention is, however, not limited thereto, and any other present or future MIP version, or, more generally, a protocol following similar principles as MIPv4/6, is also applicable;
- method steps likely to be implemented as software code portions and being run using a processor at the network element, are software code independent and can be specified using any known or future developed programming language as long as the functionality defined by the method steps is preserved;
- generally, any method step is suitable to be implemented as software or by hardware without changing the idea of the present invention in terms of the functionality implemented;
- method steps and/or devices, units or means likely to be implemented as hardware components at a terminal or network element or module thereof are hardware independent and can be implemented using any known or future developed hardware technology or any hybrids of these, such as MOS (Metal Oxide Semiconductor), CMOS (Complementary MOS), BiMOS (Bipolar MOS), BiCMOS (Bipolar CMOS), ECL (Emitter Coupled Logic), TTL (Transistor-Transistor Logic), etc., using for example ASIC (Application Specific IC (Integrated Circuit)) components, FPGA (Field-programmable Gate Arrays) components, CPLD (Complex Programmable Logic Device) components or DSP (Digital Signal Processor) components;
- devices, units or means (e.g. user equipment and base station) can be implemented as individual devices, units or means, but this does not exclude that they are implemented in a distributed fashion throughout the system, as long as the functionality of the device, unit or means is preserved.

NON-SCHEDULED UEs

As described above, the invention provides a signalling method for UEs with scheduled UL transmission. Special considerations are needed for UEs without any scheduled UL transmissions. The presented signalling method can be used for TA/PC update signalling specific for UEs with scheduled UL transmission (with a separate TA/PC update signalling for UEs without any scheduled UL transmissions or by forcing scheduled transmissions for UEs requiring TA/PC updating). Alternatively, it is possible to compose an essential part of TA/PC update signalling scheme serving UEs both with and without scheduled UL transmission. Such a solution resides in implicit association of the code sequence index used in the non-scheduled uplink channel to the code sequence index of the TA/PC control channel in the downlink. This applies especially to the code multiplexed downlink TA/PC control channel. This method, however, is equally well applicable to a multiplexing scheme, where frequency- and/or time-multiplexing is applied in addition to the mentioned code multiplexing technique.

A simple example of this is that there exist semi-statically reserved resources in the downlink frequency domain so that a set of orthogonal spreading factor sequences are available per frequency index. Thus, any PC/TA command that is needed may use its own (UE specific) code index and may be multiplexed with any other UE simultaneously to the same sub-carrier resources, up to the maximum number of UEs equal to the spreading factor. If the PC/TA control resource is not sufficient on these sub-carriers, an additional other set of frequency shifted sub-carriers can be reserved to double the signalling capacity. Again, the same set of code sequence indexes with the same spreading factor are available, as they are uniquely separated from the first set by the frequency indexes of the sub-carrier set. The frequency indexes of the orthogonal sets can further be associated to the scheduled uplink grants based on their CCE index number.

## Claims

1. A method, comprising:
associating communication resource update information with communication resource allocation information, the communication resource allocation information and the associated communication resource update information each being a portion of communication resource information;
signalling the association of the communication resource update information with the communication resource allocation information; and
transmitting the communication resource information.

2. A method, comprising:
receiving transmitted communication resource information comprising communication resource allocation information, associated communication resource update information, and a signaled association of the communication resource update information with the communication resource allocation information;
retrieving the communication resource allocation information and the associated communication resource update information from the communication resource information based on the signaled association;
transceiving signals based on the communication resource allocation information using an allocated communication resource; and
updating the communication resource based on the communication resource update information.

3. The method according to claims 1 or 2, wherein the communication resource information is received in at least one control channel element.

4. The method according to any one of claims 1 to 3, wherein the communication resource allocation information comprises at least one of a user equipment allocation, a user equipment identification and a cyclic redundancy code.

5. The method according to any one of claims 1 to 4, wherein the communication resource update information comprises at least one parameter of the communication resource to be updated and at least one of the following:
i) at least one information element indicating whether or not the communication resource is to be updated;
ii) a respective information field for each one of the at least one parameter;
iii) a common information field for each one of the at least one parameter and one information element, wherein each parameter allocates a different information length in the common information field and the one information element indicates the information length of the common information field to be read out; and
iv) a common information field consisting of a number of bits, wherein combinations of the at least one parameter are coded by pattern of the number of bits.

6. The method according to any one of claims 1 to 5, wherein the communication resource update information comprises at least one of a timing alignment update, a power control update, a frequency update, a phase update, an update of phase differences, and an update of directivity of radiation.

7. The method according to any one of claims 1 to 6, wherein the communication resource information is received in at least one physical downlink control channel.

8. The method according to claim 7, wherein the communication resource allocation information is an uplink scheduling grant.

9. The method according to claim 8, wherein, in the transceiving, the communication resource allocation information is received in at least one communication resource from a set of control channel candidates comprising the uplink scheduling grant.

10. The method according to any one of claims 1 to 6, wherein the communication resource information is an uplink scheduling grant for at least one resource of the uplink shared data channel.

11. The method according to claim 10, wherein the communication resource allocation information is a downlink scheduling grant for at least one resource of the downlink shared data channel.

12. The method according to claim 11, wherein, in the transceiving, at least a signal is transmitted using a communication resource from at least one set of uplink shared data channel resources comprised in the uplink scheduling grant.

13. The method according to claims 9 or 12, wherein, in the transceiving, the communication resource to receive is at least one of the selected set of downlink shared data channel resources comprised in the downlink scheduling grant.

14. The method according to any one of claims 1 to 13, wherein the associating and the signalling are performed on a first communication layer of a layered communication model, and the transmitting and the receiving are performed on a second communication layer of the layered communication model different from the first communication layer.

15. The method according to any one of claims 1 to 14, wherein at least a portion of the communication resource update information comprises sequence number information.

16. The method according to any one of claims 1 to 14, wherein, in the associating, an index indicating the association to the communication resource update information is attached, in the signalling, the index and the communication resource update information are signaled, and in the retrieving, the associated communication resource update information is retrieved based on the index.

17. The method according to claim 16, wherein at least a portion of the index comprises sequence number information.

18. A method, comprising:
integrating communication resource update information into communication resource allocation information, the communication resource allocation information and the integrated communication resource update information each being a portion of communication resource information; and
transmitting the communication resource information.

19. A method, comprising:
receiving transmitted communication resource information comprising communication resource allocation information comprising integrated communication resource update information;
transceiving signals based on the communication resource allocation information using an allocated communication resource; and
updating the communication resource based on the integrated communication resource update information.

20. The method according to claim 19, further comprising
detecting the integrated communication resource update information based on an invalid format of the communication resource information.

21. An apparatus, comprising:
means for associating communication resource update information with communication resource allocation information, the communication resource allocation information and the associated communication resource update information each being a portion of communication resource information;
means for signalling the association of the communication resource update information with the communication resource allocation information; and
means for transmitting the communication resource information.

22. An apparatus, comprising:
means for receiving transmitted communication resource information comprising communication resource allocation information and associated communication resource update information, and for receiving a signaled association of the communication resource update information with the communication resource allocation information;
means for retrieving the communication resource allocation information and the associated communication resource update information from the communication resource information based on the signaled association;
means for transceiving signals based on the communication resource allocation information using an allocated communication resource; and
means for updating the communication resource based on the communication resource update information.

23. The apparatus according to claims 21 or 22, wherein the communication resource information is received in at least one control channel element.

24. The apparatus according to any one of claims 21 to 23, wherein the communication resource allocation information comprises at least one of a user equipment allocation, a user equipment identification and a cyclic redundancy code.

25. The apparatus according to any one of claims 21 to 24, wherein the communication resource update information comprises at least one parameter of the communication resource to be updated and at least one of the following:
i) at least one information element indicating whether or not the communication resource is to be updated;
ii) a respective information field for each one of the at least one parameter;
iii) a common information field for each one of the at least one parameter and one information element, wherein each parameter allocates a different information length in the common information field and the one information element indicates the information length of the common information field to be read out; and
iv) a common information field consisting of a number of bits, wherein combinations of the at least one parameter are coded by pattern of the number of bits.

26. The apparatus according to any one of claims 21 to 25, wherein the communication resource update information comprises at least one of a timing alignment update, a power control update, a frequency update, a phase update, an update of phase differences, and an update of directivity of radiation.

27. The apparatus according to any one of claims 21 to 26, wherein the communication resource information is received in at least one physical downlink control channel.

28. The apparatus according to claim 27, wherein the communication resource allocation information is an uplink scheduling grant.

29. The apparatus according to claim 28, wherein the means for transceiving is configured to receive the communication resource allocation information using at least one of a communication resource from a set of control channel candidates comprising the uplink scheduling grant.

30. The apparatus according to any one of claims 21 to 29, wherein the communication resource information is an uplink scheduling grant for at least one resource of the uplink shared data channel.

31. The apparatus according to claim 30, wherein the communication resource allocation information is a downlink scheduling grant for at least one resource of the downlink shared data channel.

32. The apparatus according to claim 31, wherein the means for transceiving is configured to transmit at least a signal in a communication resource from at least one of a set of uplink shared data channel resources comprised in the uplink scheduling grant.

33. The apparatus according to claims 29 or 32, wherein the communication resource to receive is at least one of the selected set of downlink shared data channel resources comprised in the downlink scheduling grant.

34. The apparatus according to any one of claims 21 to 33, wherein the means for associating and the means for signalling are configured to operate on a first communication layer of a layered communication model, and the means for transmitting and the means for receiving are configured to operate on a second communication layer of the layered communication model different from the first communication layer.

35. The apparatus according to any one of claims 21 to 34, wherein at least a portion of the communication resource update information comprises sequence number information.

36. The apparatus according to any one of claims 21 to 34, wherein the means for associating is configured to attach an index indicating the association to the communication resource update information, the means for signalling is configured to signal the index and the communication resource update information, and the means for retrieving is configured to retrieve the associated communication resource update information based on the index.

37. The apparatus according to claim 36, wherein at least a portion of the index comprises sequence number information.

38. An apparatus, comprising:
means for integrating communication resource update information into communication resource allocation information, the communication resource allocation information and the integrated communication resource update information each being a portion of communication resource information; and
means for transmitting the communication resource information.

39. An apparatus, comprising:
means for receiving transmitted communication resource information comprising communication resource allocation information comprising integrated communication resource update information;
means for transceiving signals based on the communication resource allocation information using an allocated communication resource; and
means for updating the communication resource based on the integrated communication resource update information.

40. The apparatus according to claim 39, further comprising
means for detecting the integrated communication resource update information based on an invalid format of the communication resource information.

41. The apparatus according to any one of claims 21 to 40, wherein the apparatus is implemented as a chipset or module.

42. A system, comprising:
an apparatus according to claim 21; and
at least one apparatus according to claim 22.

43. The system according to claim 42, wherein the association of the communication resource update information with the communication resource allocation information is a one-to-one association.

44. The system according to claim 42, wherein the association of the communication resource update information with the communication resource allocation information is unique for the communication resource allocation information.

45. A system, comprising:
an apparatus according to claim 38; and
at least one apparatus according to claim 39.

46. A computer program product comprising code means for performing methods steps of a method according to any one of claims 1 to 20, when run on a computer.
